Europäisches Patentamt

European Patent Office

Office européen des brevets

(11) Publication number: **0 476 173 A1**

# EUROPEAN PATENT APPLICATION

(21) Application number: **90118100.8**

(22) Date of filing: **20.09.90**

(51) Int. Cl.5: **A47J 31/40**

(43) Date of publication of application:
**25.03.92 Bulletin 92/13**

(84) Designated Contracting States:
**AT BE CH DE DK ES FR GB GR IT LI LU NL SE**

(71) Applicant: **MIRALFIN S.R.L.**
**Via L. Seitz 47**
**I-31100 Treviso(IT)**

(72) Inventor: **De' Longhi, Giuseppe**
**Vicolo Rovero, 1**
**I-31100 Treviso(IT)**

(74) Representative: **Rapisardi, Mariacristina, Dr.**
**Proc.**
**STUDIO TECNICO LEGALE RAPISARDI Largo**
**V Alpini 15**
**I-20145 Milano(IT)**

(54) **Apparatus for production of coffee infusions.**

(57) The apparatus for the production of coffee infusions comprises a grinder (2) for coffee in beans, means (4) for feeding water to a chamber for the compression and infusion of the ground coffee which has been pre-metered in a dosage device (3) which is arranged coaxially to the infusion and compression chamber (7) and a device (8) for the expulsion of the used ground coffee after the desired coffee beverage has been produced.

Fig.1

The present invention relates to an apparatus for the production of coffee infusions.

Automatic "espresso" coffee-making machines with a built-in coffee grinder for converting said coffee from beans into powder is included, can currently be divided into two categories, i.e. into machines in which the compression of the coffee is performed mechanically, for example by means of a crank-and-connecting-rod device, or machines in which the compression of the ground coffee occurs hydraulically, using the same water available for making the coffee beverage for the actuation of the compression piston.

Apparatuses with hydraulic compression offer, with respect to those with mechanical compression, the advantage of always having a preset compression which is approximately equal to 70 kg/sq.cm. regardless of the amount of ground coffee which has been pre-metered with a particular device prior to its introduction into the compression and/or infusion chamber where the coffee infusion is formed.

It is therefore evident that in apparatuses for espresso coffee provided with hydraulic compression it is possible to pre-meter the amount of ground coffee at will without encountering problems, so as to obtain a beverage which suits the tastes of the various users.

As already mentioned, the taste and characteristics of the coffee infusion depend on various factors, such as for example the grain size of the ground product, the compression to which said ground product has been subjected during infusion, the temperature of the water, and most of all on the amount of water used in relation to the amount of ground coffee used to obtain a weak, extra strong, double coffee etc.

The above has orientated manufacturers of current espresso coffee machines toward providing said machines with a device for the dosage of the ground coffee which must be inserted in the compression and infusion chamber, allowing the user to prepare one cup of coffee or two cups of coffee of the weak, normal or extra strong types.

Current espresso coffee machines can furthermore have, as an alternative or in addition to the coffee dosage device, a device for metering the amount of water to be introduced in the infusion chamber.

These devices for the dosage of the ground coffee and of the amount of water normally have electrically operating devices, such as sensors or timers, which do not have a precise and time-invariant setting of the water and/or the ground coffee as they are affected by the moisture and temperature of the environment in which the apparatus is located and by the grain size of the coffee powder.

Consequently, besides the fact that the obtained coffee infusion does not always have the organoleptic characteristics which the user had preset, this also leads to an extreme complication of the structure of the apparatus, which is thus subjected to frequent malfunctions.

The aim of the present invention is to eliminate the disadvantages described above by providing an apparatus for the production of coffee infusions which besides having an extremely simplified structure allows to meter the water for the infusion in an extremely precise manner independently of the ground coffee and vice versa, allowing to produce a coffee infusion according to the requirements of the user.

Within the scope of this aim, an important object of the invention is to provide an apparatus for the production of coffee infusions in which the dosage of water and ground coffee is not affected by temperature, moisture and by the grain size of said ground coffee.

Another object of the present invention is to provide an apparatus for the production of coffee infusions wherein the parts which are subject to cleaning and maintenance can be easily inspected even by the user himself.

A further object of the present invention is to provide an apparatus for the production of coffee infusions in which the so-called "pellet" of used coffee is expelled downward from above, i.e. below the elements of the apparatus, so that they are not dirtied.

Not least object of the present invention is to provide an apparatus for the production of coffee infusions which has modest vertical dimensions by virtue of the horizontal arrangement of its elements and can therefore be accommodated in any location without occupying an excessive amount of space.

This aim, these objects and others are achieved by an apparatus for the production of coffee infusions which comprises a grinder of coffee in beans, a device for the dosage of the ground coffee, means for feeding water to a chamber for the compression and infusion of said ground coffee and a device for the expulsion of the used ground coffee, characterized in that said dosage device is arranged coaxially with respect to said compression and infusion chamber and is connected thereto.

Further characteristics and advantages of the invention will become apparent from the description of a preferred but not exclusive embodiment of the apparatus for the production of coffee infusions according to the invention, illustrated only by way of non-limitative example in the accompanying drawings, wherein:

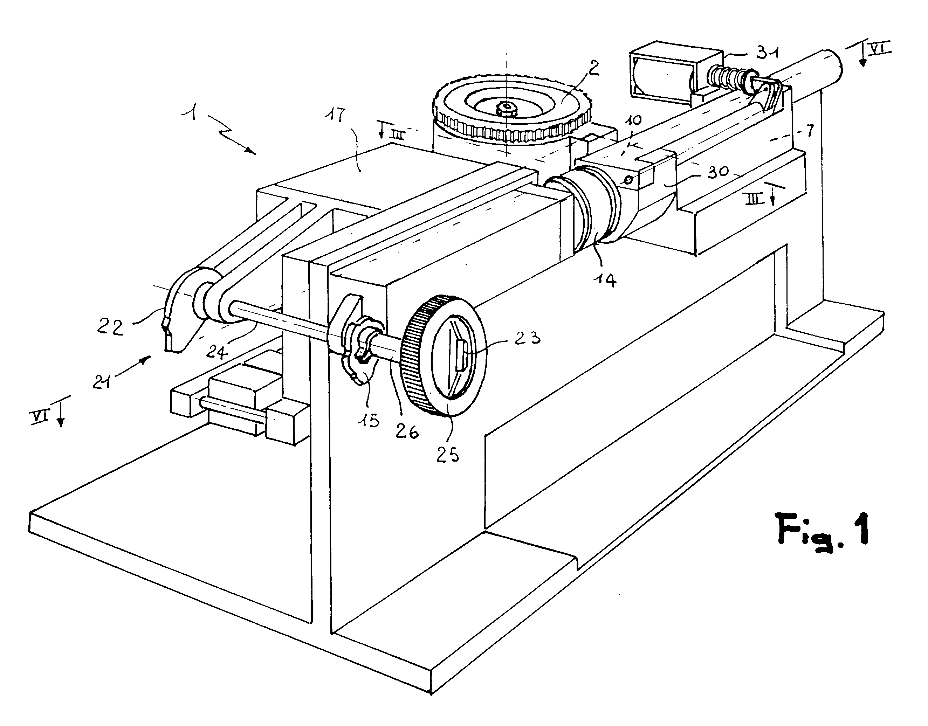

figure 1 is a perspective view of the interior of an apparatus for the production of coffee infu-

2

sions according to the invention;

figure 2 is a partially sectional plan view of the apparatus according to the invention illustrated in figure 1;

figure 3 is a partially sectional lateral elevation view taken along the line III-III of figure 1 according to the invention;

figures 4 and 5 are views of the cams for the adjustment of the amount of ground coffee and of the water for the production of the coffee infusion according to the invention;

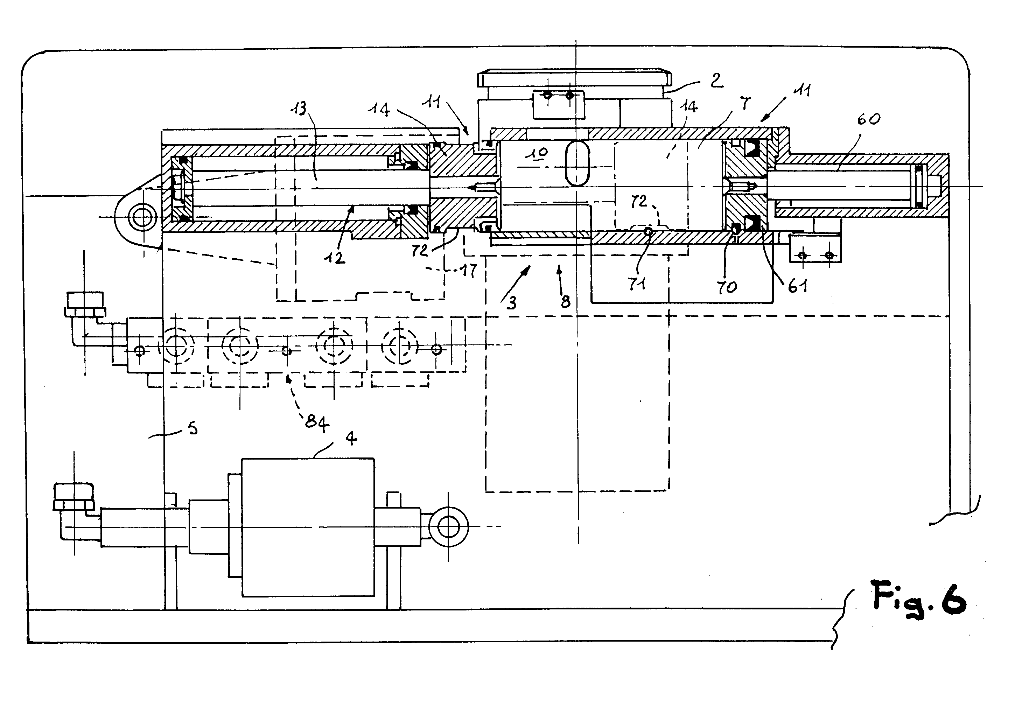

figure 6 is a partially sectional lateral elevation view, taken along the line VI-VI of figure 1, of the apparatus according to the invention;

figures 7 to 11 schematically illustrate the various steps of the introduction of the ground coffee into the dosage chamber and its subsequent pre-compression and compression up to the expulsion of the "pellet" of used coffee according to the invention; and

figure 12 is a schematic view of the operating system of the apparatus according to the invention.

With reference to the above figures, the apparatus for the production of coffee infusions according to the invention, generally indicated by the reference numeral 1, comprises a coffee grinder 2 for converting the coffee in beans into ground coffee, a device for the dosage of the ground coffee generally indicated by the reference numeral 3, a feed pump 4 for the water which is drawn from a tank 5 and fed into a cylindrical chamber 17 which is suitable for introducing a preset amount of water into the chamber 7 for the compression and infusion of the ground coffee and a device 8 for the expulsion of the "pellet" of used ground coffee 9.

Advantageously, the dosage device 3 is arranged coaxially with respect to the compression and infusion chamber 7 and is connected thereto.

More in detail, the dosage device is defined by a chamber 10 for containing the ground coffee and by means for varying the volume of the containment chamber 10 which are generally indicated by the reference numeral 11.

The containment chamber 10 is internal to the compression and infusion chamber 7 and is defined in an end portion thereof which is directed toward said means 11 for varying the volume of the containment chamber.

The means 11 for varying the volume of the containment chamber 10 comprise a compression piston 12 which is defined by a stem 13 to the end of which a head 14 is connected; said head is suitable for sliding inside the containment chamber 10 and the compression and infusion chamber 7.

Means for positioning the head 14 inside the containment chamber 10 are furthermore associated with the compression piston 12.

More precisely, the positioning means comprise at least one cam 15 which acts on an end of a rod 16 which is slidable parallel to the compression piston 12 and the opposite end whereof engages the head 14 of the piston 12 so as to vary its stroke limit position inside the chamber 10.

The compression and infusion chamber is conveniently connected to a cylindrical chamber 17 inside which a delivery piston 18, defined by a head 19 and by a stem 20, is slidable.

The piston 18 is suitable for sending the water, which arrives from the feed pump 4 and is contained in the cylindrical chamber 17, from said cylindrical chamber into the compression and infusion chamber.

Second means for varying the volume of the cylindrical chamber 17, generally indicated by the reference numeral 21, are furthermore associated with said cylindrical chamber.

The second variation means 21 comprise a second cam 22 which engages the stem 20 of the delivery piston 18, so that by varying the stroke limit of the delivery piston 18 the position of its head 19 inside the cylindrical chamber 17, and therefore the volume of water which is sent from said chamber into the compression and infusion chamber, also vary.

The water arriving from the cylindrical chamber 17 is brought to the optimum temperature by passing through the resistors 84 to be introduced inside the compression and infusion chamber through an inlet hole 70.

After mixing with the ground coffee and thus converting itself into a coffee infusion, said water exits from an outlet hole 71 by virtue of the presence of an annular recess 72 defined on the head 14 of the piston 12.

Both the cam 15 and the second cam 22 are activated by actuation means and more precisely by a first knob 23, which is connected to a shaft 24 on which the second cam 22 is rigidly keyed, and by a second knob 25, which is associated with a tubular element 26 on which the cam 15 is rigidly keyed.

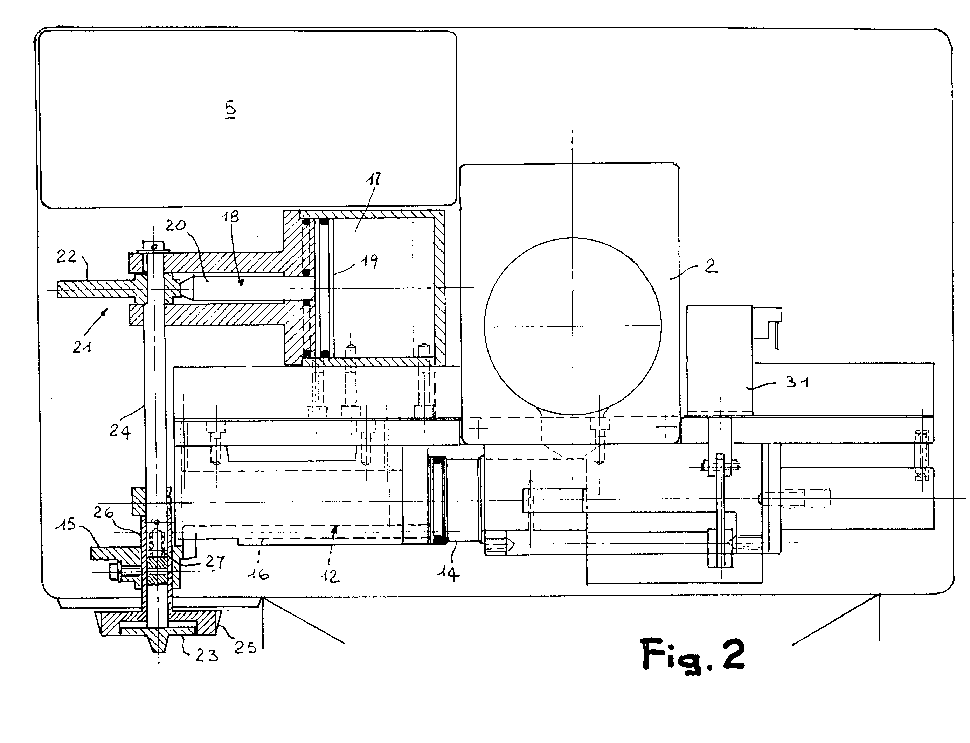

Advantageously, the tubular element 26 is coaxial to the shaft 24, and by means of a known snap-together engagement device, shown in figure 2 and indicated by 27, it is possible to simultaneously orientate the cam 15 and the second cam 22 or orientate the cam 15 in a preset manner with respect to the second cam 22, thus varying the amount of ground coffee with respect to the amount of water used for the coffee infusion.

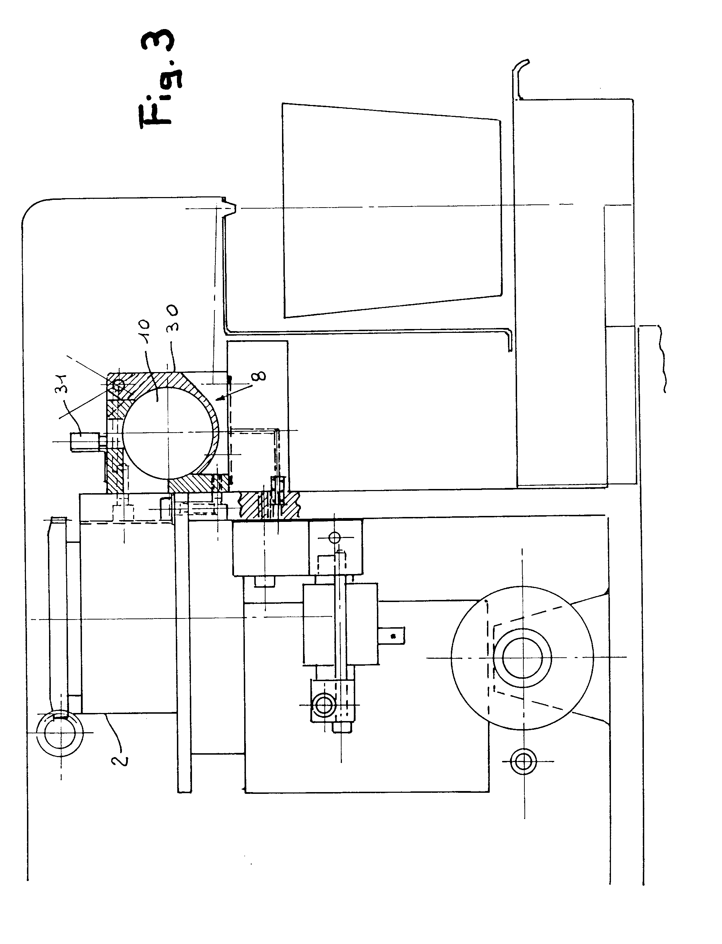

The containment chamber 10 furthermore has outlet means, and more precisely a door 30 which is associated in an oscillating manner with the body of the infusion chamber to allow the downward expulsion of the so-called "pellet" of used coffee from above so as to not dirty, as often occurs in conventional machines, the elements of the machine during the expulsion of said pellet. The opening of the door 30 can, for example, as illustrated in figure 3, be actuated by an electric switch 31. As a constructive variation, instead of the door 30 it is possible to provide a plunger which is suitable for moving the containment chamber 10 to facilitate the cleaning of its interior.

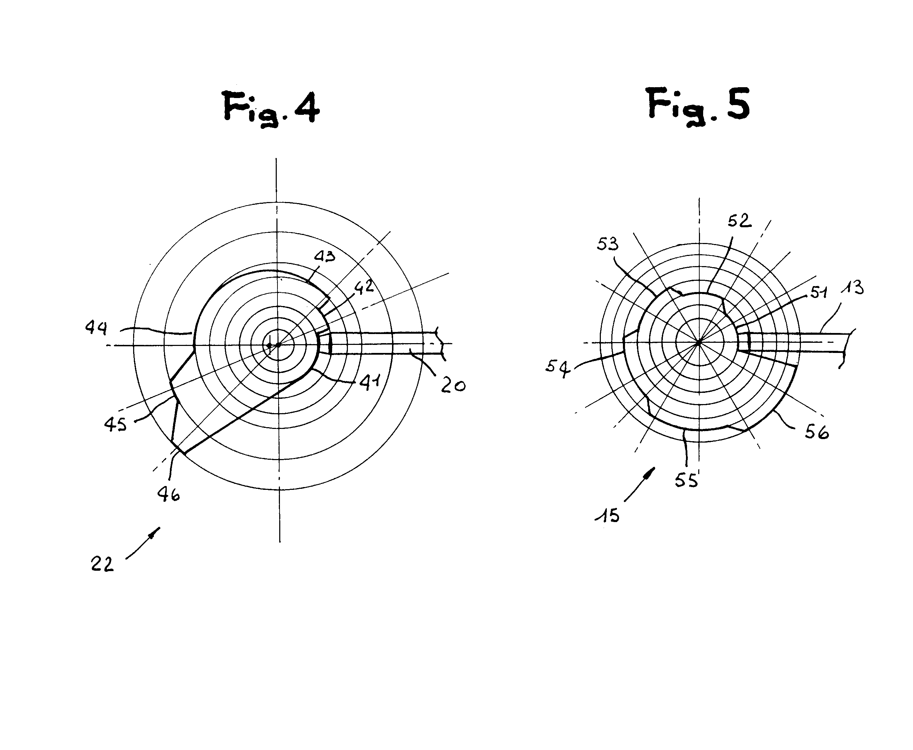

Figure 4 illustrates the second cam 22, which is suitable for varying the volume of the cylindrical chamber 17 in order to meter, according to the requirements, the water to be sent into the infusion chamber.

Figure 5 instead illustrates the cam 15, which is suitable for varying the volume of the containment chamber 10 so as to vary the amount of ground coffee again according to the requirements.

In figure 4, for example, it can be seen that the stem 20 of the piston 18 is arranged on the cam portion, indicated by 41, which is equivalent to the maximum volume of the cylindrical chamber 17, i.e. approximately 100 cu.cm. of water, which are equivalent to two so-called "lungo" (weak) coffees.

The portion of the cam 22 which is indicated by 42 corresponds to two normal coffees, whereas the portion indicated by 43 corresponds to two so-called "ristretto" (extra strong) coffees.

By rotating the cam through 180 degrees, the portion 44 of the cam 22 moves the stem 20 so as to vary the internal volume of the cylindrical chamber 17 which is equivalent to an amount of water required to produce a coffee of the "lungo" type, whereas the portion 45 allows the cylindrical chamber to have a volume equivalent to the water required for a normal coffee and the portion 46 moves the piston 18 by an extent which is causes the presence of a preset amount of water in the cylindrical chamber 17 so as to form a so-called "ristretto" coffee.

If one now observes figure 5, it can be seen that the cam 15, in the point in which the stem 13 of the piston 12 is schematically drawn, meters an amount of ground coffee which is equivalent to two coffees, i.e. an amount which is substantially equal to 10 grams (portion 51).

By rotating the cam so that the portion 52 moves the stem 20 forward, the volume of the containment chamber 10 is reduced, so that according to the requirements it is possible to make a double coffee with 9 grams of ground coffee.

The portion 53 of the cam 15, by moving the stem 20 and therefore the head 12 of the piston 12 further forward, further reduces the volume of the dosage chamber 10 in order to make a double coffee with 8 grams of ground coffee.

By then rotating the cam so that the portions 54, 55 and 56 thereof move the stem 20 forward, the volume of the containment chamber 10 is progressively reduced so that it can contain 7 grams, 6 grams and 5 grams of ground coffee respectively, so as to prepare at will a cup of coffee according to the user's taste.

As already mentioned, by varying the respective position of the two cams 15 and 22 it is possible to obtain a coffee or a double coffee with a freely selectable weight of ground coffee according to the consumer's requirements.

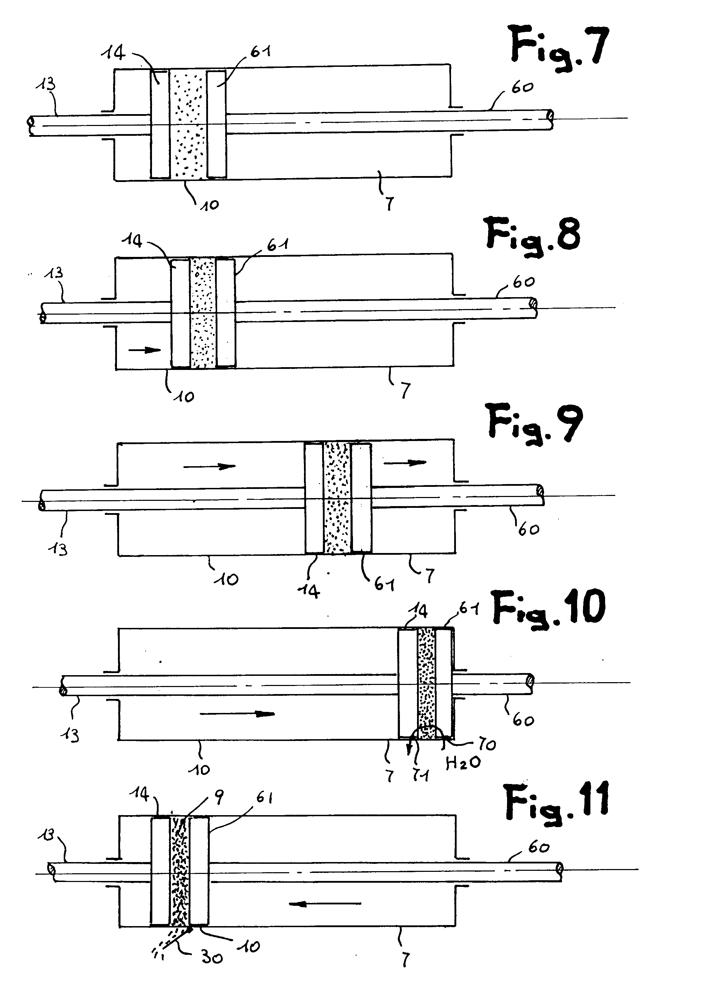

The operation of the apparatus for the production of coffee infusions according to the invention is evident from what has been described and illustrated; in particular, with reference to figures 7 to 12 it is possible to observe the following.

The coffee which has been ground in the grinder and thus converted from beans to powder is introduced in the containment chamber 10 in a preset and defined volume, as shown in figure 7, by the head 14 of the piston 12 which has been positioned by means of the cam 15 and of the head 61 of the piston 60 which is fully shifted inside the dosage chamber.

When the ground coffee has filled the containment chamber 10 defined by the heads 14 and 61, the piston 12 is moved hydraulically, thus performing a pre-compaction of the ground coffee (figure 8) and then moving the piston 60 backward as well until it reaches its stroke limit.

When the piston 60 is at its stroke limit, the piston 12 performs the compression of the ground coffee according to the preset values, i.e. 70 kg/sq.cm.

Simultaneously with these operations, and more precisely during the introduction of the ground coffee in the containment chamber, a preset amount of water is also introduced in the cylindrical chamber 17, and its volume is determined by the movement of the head 19 of the piston 18 as a function of the rotation of the cam 22.

After the piston 12 has performed the compression of the ground coffee, the piston 18 expels the preset water from the cylindrical chamber 17, making it pass through the inlet hole 70 within the ground coffee and making it flow out through the outlet hole 71, also by virtue of the presence of an annular recess 72 on the piston 12.

Finally, the piston 60, by translating hydraulically, expels the used coffee through the door 30 which has opened.

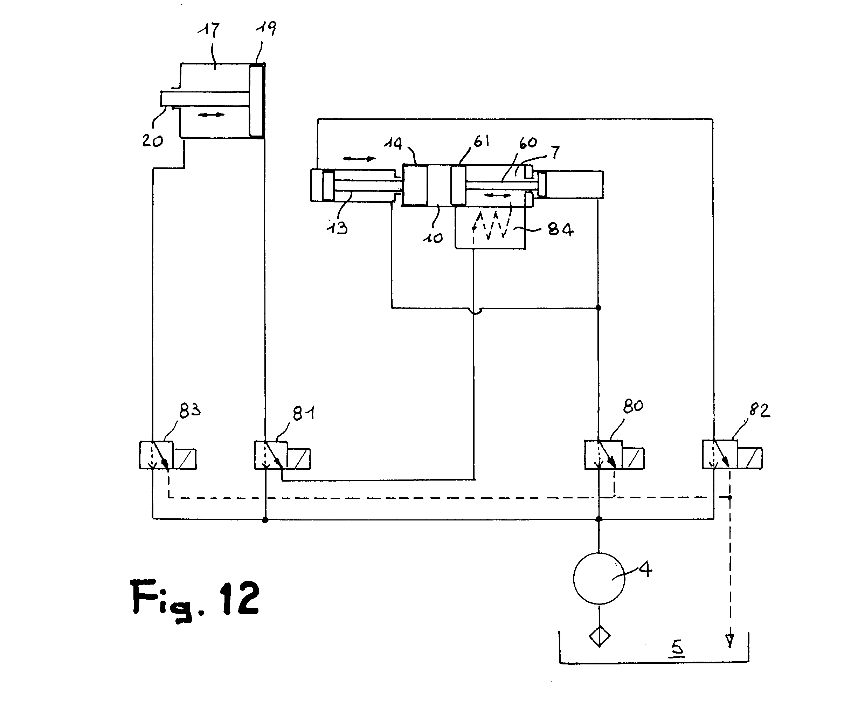

The above described scheme of operation can also be seen from figure 12, wherein it can be seen that when the pump 4 draws water from the tank 5 the valves 80 and 81 are open in the position illustrated in broken lines, so that the piston 60 translates internally to the infusion and compression chamber and the piston 12 moves backward to the stroke limit determined by the rod 16.

The water is simultaneously sent from the tank 5 through the pump 4, by means of the valve 81 which is open, into the cylindrical chamber 17, the volume whereof is determined by the position of the head 19, which is due to the cam 22, inside said chamber.

In this step, the valves 82 and 83 are in the position indicated by solid lines.

In the subsequent step, the valves 82 and 83 are in the position indicated in broken lines and the valves 80 and 81 are in the position indicated by solid lines, so that there is a simultaneous translatory motion of the pistons 12 and 60 in the direction opposite to the preceding one.

The water is pushed from the cylindrical chamber 17 through the valve 18 into the group of resistors 84 where, after being heated to approximately 80 degrees, it is fed into the infusion chamber, thus obtaining the pre-required coffee infusion.

In practice it has been observed that the apparatus for the production of coffee infusions is particularly advantageous in that it has an extremely simple structure, since the dosage chamber is provided directly inside the infusion and compression chamber, thus avoiding the construction of hoppers and ducts for the transfer of the ground coffee from the grinder to the dosage chamber and from said dosage chamber to the infusion chamber.

It is furthermore possible to volumetrically vary, in a mechanical manner which as such is not subjected to variations in temperature, humidity and the like, the volume of the ground coffee independently of the volume of water and vice versa to form the coffee infusion so as to have a very high flexibility of use of the apparatus, so as to satisfy any requirement of the user.

The invention thus conceived is susceptible to numerous modifications and variations, all of which are within the scope of the inventive concept; all the details may furthermore be replaced with technically equivalent elements.

In practice, the materials employed, as well as the dimensions, may be any according to the requirements and to the state of the art.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

WHERE TECHNICAL FEATURES MENTIONED IN ANY CLAIM ARE FOLLOWED BY REFERENCE SIGNS, THOSE REFERENCE SIGNS HAVE BEEN INCLUDED FOR THE SOLE PURPOSE OF INCREASING THE INTELLIGIBILITY OF THE CLAIMS AND ACCORDINGLY, SUCH REFERENCE SIGNS DO NOT HAVE ANY LIMITING EFFECT ON THE SCOPE OF EACH ELEMENT IDENTIFIED BY WAY OF EXAMPLE BY SUCH REFERENCE SIGNS.

## Claims

1. Apparatus for the production of coffee infusions, comprising a grinder (2) for coffee in beans, a device (3) for the dosage of the ground coffee, means (4) for feeding water to a chamber (7) for the compression and infusion of said ground coffee, a device (8) for the expulsion of the used ground coffee, characterized in that said dosage device is arranged coaxially with respect to said compression and infusion chamber and is connected thereto.

2. Apparatus according to claim 1, characterized in that said dosage device comprises a chamber (10) for the containment of said ground coffee and means (11) for varying the volume of said containment chamber.

3. Apparatus according to claim 2, characterized in that said containment chamber (10) is defined by a portion of said compression and infusion chamber (7).

4. Apparatus according to claim 2, characterized in that said containment chamber comprises outlet means (30) for said used ground coffee which cooperate with said expulsion device.

5. Apparatus according to claim 2, characterized in that said means (11) for varying the volume of said containment chamber comprise a compression piston (12) which is slidable in said containment chamber and in said compression and infusion chamber and means (15, 16) for positioning its head (14) inside said containment chamber which are activated by actuation means (22, 23, 24).

6. Apparatus according to claim 5, characterized in that said positioning means comprise at least one cam (15) which acts on an end of a rod (16) which is slidable parallel to said piston (12), the opposite end of said rod engaging said head (14).

7. Apparatus according to claim 1, characterized in that said feed means comprise a delivery piston (18) which is slidable in a cylindrical chamber (17) which contains the water which arrives from a feed pump (4) for forming the coffee infusion, said cylindrical chamber being connected to said compression and infusion chamber.

8. Apparatus according to claim 7, characterized in that it comprises second means (21) for varying the volume of said cylindrical chamber.

9. Apparatus according to claim 8, characterized in that said second means comprise at least one second cam (22) which engages the stem (20) of said delivery piston (18) to vary to position of its head (19) inside said cylindrical chamber.

10. Apparatus according to claim 9, characterized in that said second means are activated by said actuation means, which comprise a first knob (23) which is connected to a shaft (24) on which said second cam (22) is rigidly keyed and a second knob (25) which is connected to a tubular element (26) which is coaxial to said shaft and on which said cam (15) is rigidly keyed, an engagement device (27) being provided for the snap-together and orientated association of said shaft with said tubular element.

11. Apparatus according to claim 4, characterized in that said outlet means comprise a door (30) which is oscillably associated with the body of said infusion chamber for the expulsion of said used coffee with a direction which is substantially downward from above.

12. Apparatus according to one of the preceding claims, characterized in that said compression and infusion chamber comprises an inlet hole (70) and an outlet hole (71), said outlet hole internally facing an annular recess (72) which is defined on said head of said compression piston.

13. Process for the preparation of a coffee infusion with an espresso coffee apparatus, characterized in that it consists in: grinding an amount of coffee in beans, volumetrically metering said ground coffee inside a chamber for the compression and infusion of said coffee, volumetrically metering the amount of water for the production of the coffee infusion independently of the volume of said ground coffee, pre-compressing said metered coffee, compressing said metered coffee up to a preset pressure, introducing said pre-metered water into said infusion chamber and into said compressed coffee, obtaining the coffee infusion, and expelling downward, from above, the "pellet" of used coffee from said compression

and infusion chamber.

Fig. 1

Fig. 2

Fig. 3

Fig. 4

Fig. 5

Fig. 6

Fig.7

Fig.8

Fig.9

Fig.10

Fig.11

Fig. 12

# EUROPEAN SEARCH
# REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,Y | EP-A-0 202 517   (JEAN-PAUL, IN ALBON)voir tous le document<br>– – – | 1-5,7-9, 11-13 | A 47 J 31/40 |
| Y | DE-A-1 579 440   (OLYMPIA-EXPRESS KAFFEEMASCHINEN-FABRIK)<br>* claim 1; figures 1,2 *<br>– – – | 7,8,9,13 | |
| Y,A | WO-A-8 203 758   (RENEKA)<br>* page 2, line 38 - page 6, line 24; figures 3,4 *<br>– – – | 11,1-5,13 | |
| A | EP-A-0 197 855   (SEB S.A.)<br>* claim 1; figures 1,5 *<br>– – – | 5,6 | |
| Y | FR-A-2 452 905   (P. VALENTE, T. PILONI)<br>* page 4, line 1 - page 4, line 6; figure 1 *<br>– – – | 12 | |
| A | EP-A-0 309 780   (V. CINONI)<br>– – – – – | | |

|  |  |
|---|---|
| | TECHNICAL FIELDS SEARCHED (Int. Cl.5) |
| | A 47 J |

The present search report has been drawn up for all claims

| Place of search | Date of completion of search | Examiner |
|---|---|---|
| The Hague | 17 May 91 | VISTISEN L.M. |